# EUROPEAN PATENT APPLICATION

(11) **EP 4 755 524 A1**
(43) Date of publication of application: **10.06.2026**
(21) Application number: 25219855.1
(22) Date of filing: 01.12.2025
(51) Int. Cl.: B05C 5/02, B05C 9/06, H01M 4/04

(54) **COATING APPARATUS AND ELECTRODE MANUFACTURING APPARATUS**

(30) Priority: 03.12.2024 KR 20240177364
(71) Applicant: SAMSUNG SDI CO., LTD., Yongin-si, Gyeonggi-do 17084 (KR)
(72) Inventor: PARK, Hye Min, 16678 Suwon-si, Gyeonggi-do (KR); LEE, Jung Hyun, 16678 Suwon-si, Gyeonggi-do (KR); PARK, Jeong Yi, 16678 Suwon-si, Gyeonggi-do (KR); LEE, Gi Wook, 16678 Suwon-si, Gyeonggi-do (KR); JUNG, Min Gyu, 16678 Suwon-si, Gyeonggi-do (KR)
(74) Representative: Michalski Hüttermann & Partner mbB

(57) **Abstract**

The present disclosure relates to a coating apparatus for manufacturing an electrode for a secondary battery and an electrode manufacturing apparatus, and the problem to be solved is to suppress a bulging phenomenon in an overlapping portion in which a composite slurry layer and an insulating slurry layer overlap and also reduce the width dispersion of the overlapping portion. In embodiments, there is provided a coating apparatus configured to coat a first slurry and a second slurry on an electrode sheet conveyed in one direction, including a first die, a second die disposed to face the first die, and a spacer interposed between the first die and the second die, and including a first discharge portion configured to discharge the first slurry and a second discharge portion located on at least one side of the first discharge portion in a width direction of the electrode sheet and configured to discharge the second slurry, wherein the first discharge portion has a width at a distal end that is greater than a width at a non-distal end.

## Description

### FIELD

The present disclosure relates to a coating apparatus for manufacturing an electrode for a secondary battery and an electrode manufacturing apparatus.

### BACKGROUND

Secondary batteries are batteries that can be charged and discharged, unlike primary batteries that cannot be recharged. Low-capacity secondary batteries are used in small portable electronic devices such as smartphones, feature phones, notebook computers, digital cameras, and camcorders, and high-capacity secondary batteries are widely used as power sources for driving a motor motor in hybrid vehicles, electric vehicles, and the like, power storage batteries, and the like in hybrid vehicles, electric vehicles, and the like. Such a secondary battery includes electrodes including a positive electrode and/or a negative electrode, an electrode assembly including the electrodes, a case which accommodates the electrode assembly, electrode terminals connected to the electrode assembly, etc.

As technology advances, high-capacity secondary batteries are required. Accordingly, a plurality of secondary batteries can be used by being electrically connected. For example, the secondary battery may be applied to an electronic device in the form of a secondary battery module including a plurality of secondary batteries and/or a secondary battery pack including a plurality of secondary battery modules. In some embodiments, the secondary battery pack may be formed using a plurality of secondary batteries. In this case, the electronic device is an electronic device requiring high output and/or high capacity and includes, for example, electric vehicles and the like.

A secondary battery typically includes a stack-type electrode assembly in which a positive electrode, a separator, and a negative electrode are alternately stacked. The positive electrode is manufactured by coating a positive electrode composite slurry including a positive electrode active material on a positive electrode substrate, followed by drying and rolling, the negative electrode is manufactured by coating a negative electrode composite slurry including a negative electrode active material on a negative electrode substrate, followed by drying and rolling.

The herein-described information disclosed in the background technology of this disclosure is only intended to improve understanding of the background of the present disclosure and therefore may include information that does not constitute related art.

### SUMMARY

The present disclosure is directed to providing a coating apparatus for manufacturing an electrode of a secondary battery and an electrode manufacturing apparatus, which are capable of suppressing a bulging phenomenon in an overlapping portion in which a composite slurry layer and an insulating slurry layer overlap, and reducing the width dispersion of the overlapping portion.

However, technical problems to be solved by the present disclosure are not limited to the problems described herein, and other problems that are not described may be clearly understood by those skilled in the art from the description of the disclosure described herein.

According to aspects of the present disclosure, there is provided a coating apparatus configured to coat a first slurry and a second slurry on an electrode sheet conveyed in one direction, including a first die, a second die disposed to face the first die, and a spacer interposed between the first die and the second die, and including a first discharge portion configured to discharge the first slurry and a second discharge portion located on at least one side of the first discharge portion in a width direction of the electrode sheet and configured to discharge the second slurry, wherein the first discharge portion may have a width of a distal end that is greater than a width of a non-distal end.

According to implementation examples of the embodiments, the spacer may include a spacing portion disposed between the first discharge portion and the second discharge portion, and the spacing portion may have a width of a first size at the non-distal end and a width of a second size less than the first size at the distal end. In this case, the spacing portion may include a chamfered shape in a direction from the first discharge portion toward the second discharge portion. For example, the first size may range from 1 mm to 3 mm and the second size may range from 0.1 mm to 0.3 mm.

According to implementation examples of the embodiments, the first slurry may include a composite slurry and the second slurry may include an insulating slurry. In this case, an insulating slurry layer formed by the insulating slurry may overlap an edge of a composite slurry layer formed by the composite slurry by a predetermined width. For example, the composite slurry layer and the insulating slurry layer may overlap in a width range of 0.05 mm to 0.15 mm.

According to implementation examples of the embodiments, the second discharge portions may be located on both sides of the first discharge portion in the width direction of the electrode sheet.

According to implementation examples of the embodiments, the spacer may include a flow path connecting an inlet into which the second slurry is introduced and the second discharge portion, and the flow path may include an inlet flow path portion extending from the inlet with a first width, a connecting flow path portion extending from the inlet flow path portion and having a width that decreases from the first width to a second width, and a discharge flow path portion extending from the connecting flow path portion and communicating with the second discharge portion with the second width. In this case, the connecting flow path portion may be inclined at an angle of 40 to 70° with respect to a discharge surface of the second discharge portion.

According to implementation examples of the embodiments, the second die may include a cavity into which the first slurry is introduced and filled, and the first discharge portion may communicate with the cavity.

According to aspects of the present disclosure, there is provided a coating apparatus configured to simultaneously coat a composite slurry and an insulating slurry on an electrode sheet conveyed in one direction, including an upper die, a lower die disposed to face the upper die, and a spacer interposed between the upper die and the lower die, and including a composite material discharge port configured to discharge the composite slurry and an insulator discharge port disposed on at least one side of the composite material discharge port to discharge the insulating slurry, wherein the composite material discharge port includes a chamfered shape such that a width at a distal end is greater than a width at a non-distal end.

According to implementation examples of the embodiments, the spacer may include a spacing portion disposed between the composite material discharge port and the insulator discharge port, and the spacing portion may have a width of a first size at the non-distal end and a width of a second size less than than the first size at the distal end. In this case, the chamfered shape may be formed by the spacing portion being chamfered from the composite material discharge port toward the insulator discharge port. For example, the first size may range from 1 to 3 mm, and the second size may range from 0.1 to 0.3 mm.

According to implementation examples of the embodiments, an insulating slurry layer formed by the insulating slurry may overlap an edge of a composite slurry layer formed by the composite slurry by a predetermined width. For example, the composite slurry layer and the insulating slurry layer may overlap in a width range of 0.05 to 0.15 mm.

According to implementation examples of the embodiments, the insulator discharge ports may be located on both sides of the composite material discharge port.

According to implementation examples of the embodiments, the spacer may include a flow path connecting an inlet into which the insulating slurry is introduced and the insulator discharge port, and the flow path may include an inlet flow path portion extending from the inlet with a first width, a connecting flow path portion extending from the inlet flow path portion and having a width that decreases from the first width to a second width, and a discharge flow path portion extending from the connecting flow path portion and communicating with the insulator discharge port with the second width.

According to aspects of the present disclosure, there is provided an electrode manufacturing apparatus including a coating apparatus configured to simultaneously coat a composite slurry and an insulating slurry on an electrode sheet to form a first coating layer, a drying apparatus configured to dry the first coating layer on the electrode sheet proceeding in a first direction from the coating apparatus to form a second coating layer, and a rolling apparatus configured to press the electrode sheet on which the second coating layer is formed and bond the second coating layer to the electrode sheet, wherein the coating apparatus may include an upper die, a lower die disposed to face the upper die and a spacer interposed between the upper die and the lower die, and including a composite material discharge port configured to discharge the composite slurry and an insulator discharge port disposed on at least one side of the composite material discharge port to discharge the insulating slurry, and the composite material discharge port may include a chamfered shape such that a width at a distal end is greater than a width at a non-distal end.

### BRIEF DESCRIPTION OF THE DRAWINGS

The following drawings attached to the present specification illustrate exemplary embodiments of the present disclosure and further describe aspects and features of the present disclosure together with the detailed description of the present disclosure. Thus, the present disclosure should not be construed as being limited to the drawings, in which:
FIG. 1 is a view schematically illustrating a cylindrical secondary battery that may be applied to embodiments of the present disclosure;
FIG. 2 is a cross-sectional view schematically illustrating a prismatic secondary battery that may be applied to embodiments of the present disclosure;
FIG. 3 is a view schematically illustrating an example of a pouch-type secondary battery that may be applied to embodiments of the present disclosure;
FIG. 4 is a view schematically illustrating another example of the pouch-type secondary battery that may be applied to embodiments of the present disclosure;
FIG. 5 is a block diagram illustrating an example of a schematic configuration of an electrode manufacturing apparatus;
FIG. 6 is a view schematically illustrating a process of forming a composite slurry layer and an insulating slurry layer on an electrode sheet using a coating apparatus according to embodiments;
FIG. 7 is an exploded perspective view illustrating an example of the coating apparatus according to embodiments;
FIG. 8 is a view schematically illustrating a spacer in the coating apparatus in FIG. 7 as viewed from a roller side;
FIG. 9A is a view schematically illustrating an upper surface of the spacer in FIG. 7;
FIG. 9B is an enlarged view of portion X in FIG. 9A; and
FIG. 9C is an enlarged view of portion Y in FIG. 9A.

### DETAILED DESCRIPTION

Hereinafter, exemplary embodiments of the present disclosure will be described in detail with reference to the attached drawings. Prior to this, terms or words used in this specification and claims should not be interpreted limited to ordinary or dictionary meanings and should be interpreted as meanings and concepts consistent with the technical idea of this disclosure based on the principle that the inventor can properly define the concepts of terms in order to describe his or her disclosure in the best way. Accordingly, it is to be understood that the embodiments described herein, and the configurations illustrated in the drawings are only some of the most exemplary embodiments of the disclosure and do not represent all of the technical ideas of the disclosure, and that there may be various equivalents and modifications that may replace them at the time of filing.

Furthermore, when used herein, the terms "comprise" or "include" and/or "comprising" or "including" specify the presence of stated shapes, numbers, steps, operations, members, elements, and/or groups thereof and are not intended to exclude the presence or addition of one or more other shapes, numbers, operations, members, elements, and/or groups thereof.

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are "equal" means "substantially the same." Therefore, substantially the same may include deviations that are considered low in the art, for example, deviations of less than 5%. Additionally, uniformity of a parameter over a given region may mean uniformity from an average perspective.

Although first, second, and the like are used to describe various components, these components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary component is disposed "on (or under)" a first component or "above (or below)" the first component, it can mean not only that the arbitrary component is disposed in contact with the top (or bottom) of the first component, but also that a second component can be interposed between the first component and the arbitrary component disposed on (or under) the first component.

In addition, when a component is described as "connected to," "coupled to", or "linked to" in another component, these components may be directly connected, coupled, or linked to each other, but it should be understood that still another component may be "interposed" between these components, or these components may be "connected," "coupled," or "linked" through still another component.

As used herein, the term "and/or" includes any and all combinations of one or more of the associated listed items. Further, the use of "may" when describing embodiments of the present disclosure refers to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc., may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above."

The terms used in the present specification are intended to describe the embodiments of the present disclosure and are not intended to limit the present disclosure.

In general, a coating apparatus called a slot die is used for the composite slurry coating. In the slot die, the composite slurry coating process is performed by discharging the composite slurry onto a sheet of electrode substrate (hereinafter referred to as "an electrode sheet") that is conveyed in one direction by a roller. Coating methods include a stripe coating method in which the composite slurry is continuously discharged in a longitudinal direction of the electrode sheet and coated, and a pattern coating method in which the composite slurry is intermittently discharged and coated.

An edge of the composite slurry layer formed by the stripe coating method may be additionally coated with an insulating slurry containing an insulating material. The insulating slurry layer may reduce dispersion generated by the fluctuation of the coating width fluctuates while the composite slurry is coated, and may prevent a short circuit between a negative electrode composite material and a positive electrode substrate when assembled into a battery. To this end, the insulating slurry may be discharged such that a portion of the insulating slurry layer overlaps the edge of the composite slurry layer. The insulating slurry may be discharged simultaneously with the composite slurry onto the electrode sheet or may be discharged sequentially after the discharge of the composite slurry.

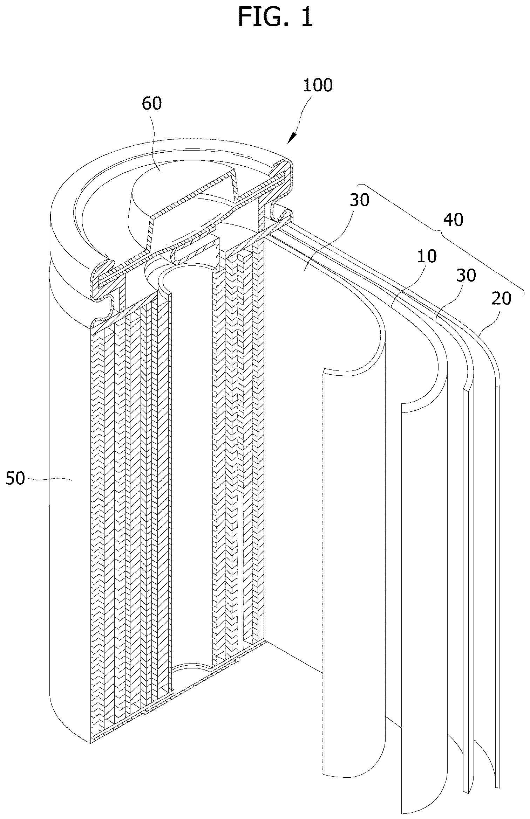

FIGS. 1 to 4 are cross-sectional views schematically illustrating a secondary battery that may be applied to embodiments of the present disclosure.

### Secondary battery 100

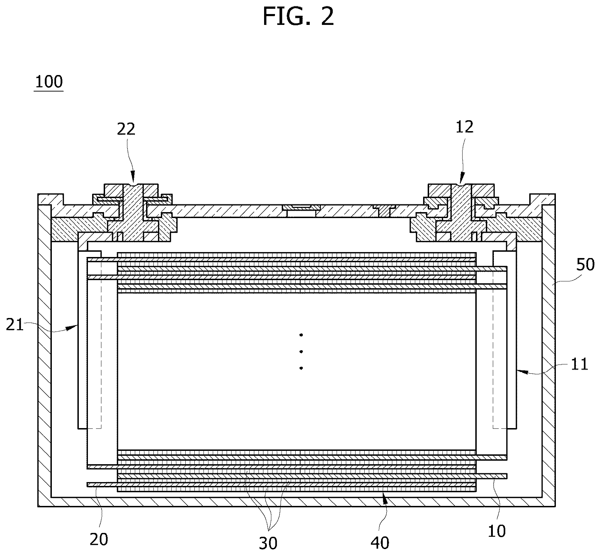

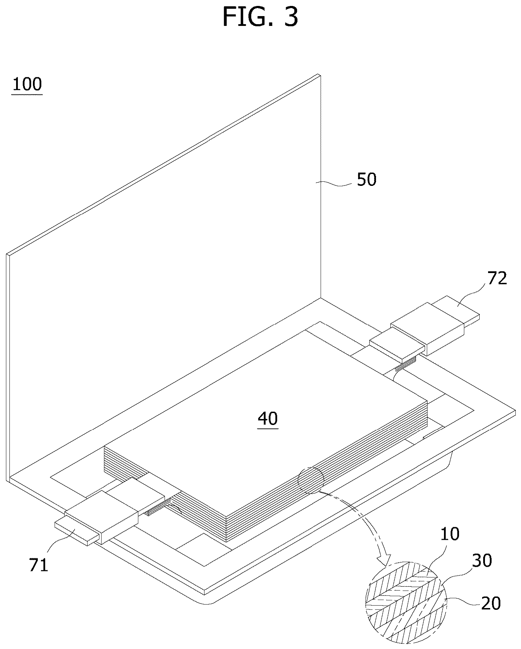

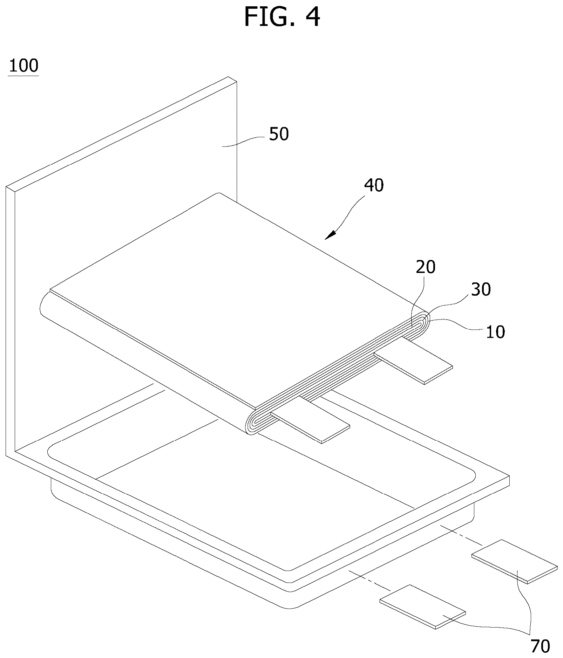

The secondary battery 100 may be classified into a cylindrical, prismatic, pouch-type, or coin-type secondary battery depending on its shape. FIGS. 1 to 4 are views schematically illustrating secondary batteries according to embodiments, wherein FIG. 1 illustrates a cylindrical type secondary battery, FIG. 2 illustrates a prismatic type secondary battery, and FIGS. 3 and 4 illustrate pouch-type secondary batteries. Referring to FIGS. 1 to 4, the secondary battery 100 may include an electrode assembly 40 with a positive electrode 10, a negative electrode 20 and a separator 30 interposed between the positive electrode 10 and the negative electrode 20, and a case 50 in which the electrode assembly 40 is accommodated. The positive electrode 10, the negative electrode 20, and the separator 30 may be impregnated with an electrolyte (not illustrated). The secondary battery 100 may include a sealing member 60 that seals the case 50 as illustrated in FIG. 1. In addition, the secondary battery 100 in FIG. 2 may include a positive electrode lead tab 11 and a positive electrode terminal 12, and a negative electrode lead tab 21 and a negative electrode terminal 22. As illustrated in FIGS. 3 and 4, the secondary battery 100 may include an electrode tab 70, i.e., a positive electrode tab 71 and a negative electrode tab 72, which serve as electrical paths for conducting current formed in the electrode assembly 40 to the outside.

### Positive electrode active material

As the positive electrode active material, a compound capable of reversible intercalation and deintercalation of lithium (lithiated intercalation compound) may be used. Specifically, one or more of composite oxides of lithium and a metal selected from cobalt, manganese, nickel, and a combination thereof may be used.

The composite oxide may be a lithium transition metal composite oxide, and specific examples thereof may include lithium nickel-based oxides, lithium cobaltbased oxides, lithium manganese-based oxides, lithium iron phosphate-based compounds, cobalt-free nickel-manganese-based oxides, or a combination thereof.

For example, a compound represented as any one of chemical formulas herein may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the herein chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material can realize high capacity and thus may be applied to high capacity, high density lithium secondary batteries.

### Positive electrode 10

The positive electrode 10 for the secondary battery 100 may include a current collector (substrate) and a positive electrode active material layer (a positive electrode composite layer) formed on the current collector. The positive electrode active material layer includes a positive electrode active material and may further include a binder and/or a conductive material. For example, the positive electrode may further include an additive that may function as a sacrificial positive electrode.

The content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

The binder serves to attach particles constituting the positive electrode active material to each other well and also to attach the positive electrode active material to the current collector well. Representative examples of the binder may include polyvinyl alcohol, carboxymethylcellulose, hydroxypropyl cellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

The conductive material is used to impart conductivity to the electrode, and any material which does not cause a chemical change and is electrically conductive may be used. Examples of the conductive material may include a carbon-based material such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, etc.; a conductive polymer such as a polyphenylene derivative; or a mixture thereof.

Al may be used as the current collector plate, but the present disclosure is not limited thereto.

### Negative electrode active material

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or Sn-based negative electrode active material may be used as the material capable of doping and dedoping lithium. The Si-based negative electrode active material may include silicon, a silicon-carbon composite, SiOₓ (0<x<2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to embodiments, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

### Negative electrode 20

The negative electrode 20 for the secondary battery 100 may include a current collector (substrate), and a negative electrode active material layer (a negative electrode composite layer) disposed on the current collector. The negative electrode active material layer includes a negative electrode active material, and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The binder serves to attach particles constituting the negative electrode active material to each other well, and also to attach the negative electrode active material to the current collector well. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the negative electrode binder, a cellulose-based compound capable of imparting viscosity may be further included. This cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder is a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material which does not cause a chemical change and is electrically conductive may be used. Specific examples may include a carbon-based material such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, etc.; a conductive polymer such as a polyphenylene derivative; or a mixture thereof.

The negative electrode current collector (substrate) may be selected from copper foil, nickel foil, stainless steel foil, titanium foil, nickel foam, copper foam, a polymer substrate coated with a conductive metal, and a combination thereof.

### Electrolyte (not illustrated)

The electrolyte of the secondary battery 100 contains a non-aqueous organic solvent and a lithium salt.

The non-aqueous organic solvent acts as a medium through which ions involved in the electrochemical reaction of the battery can move.

The non-aqueous organic solvent may be a carbonate-based solvent, an ester-based solvent, an ether-based solvent, a ketone-based solvent, an alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. As the alcohol-based solvent, ethyl alcohol, isopropyl alcohol, and the like may be used. As the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane, and the like may be used.

The non-aqueous organic solvent may be used alone or in a mixture of two or more.

In addition, when using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the secondary battery and promoting the movement of lithium ions between the positive electrode and the negative electrode. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOP), and lithium bis(oxalato)borate (LiBOB).

### Separator 30

Depending on the type of the secondary battery 100, a separator 30 may be present between the positive electrode 10 and the negative electrode 20. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

The separator 30 may include a porous substrate and a coating layer containing an organic material, an inorganic material, or a combination thereof located on one or both sides of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

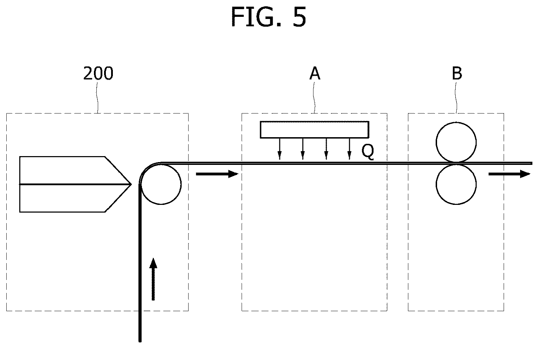

FIG. 5 is a block diagram illustrating an example of a schematic configuration of an electrode manufacturing apparatus. The electrode manufacturing apparatus of FIG. 5 may be, for example, an apparatus that forms a first coating layer including a composite slurry layer and an insulating slurry layer by simultaneously applying a composite slurry and an insulating slurry to an electrode sheet functioning as a substrate (electrode current collector), forms a second coating layer by drying the composite slurry and the insulating slurry through application of thermal energy to the first coating layer on the electrode sheet, and continuously presses the electrode sheet on which the second coating layer is formed to adhere the second coating layer to the electrode sheet. Referring to FIG. 5, the electrode manufacturing apparatus includes a coating apparatus 200, an electrode drying apparatus A, and a rolling apparatus B.

The coating apparatus 200 is an apparatus for forming the first coating layer by simultaneously applying the composite slurry and the insulating slurry on the electrode sheet. The composite slurry may be a positive electrode composite slurry or a negative electrode composite slurry. The composite slurry may be manufactured by mixing a powder mixture including a conductive material and/or a binder in addition to an electrode active material into a predetermined solvent. In addition, the insulating slurry may be manufactured by mixing a powder mixture including an insulating material (insulator) into a predetermined solvent. The insulator may be an inorganic oxide such as aluminum oxide (Al₂O₃), silicon oxide (SiO₂), magnesium oxide (MgO), zirconium oxide (ZrO₂), etc.

The coating apparatus 200 may include, but is not limited to, a die coater for simultaneously coating the composite slurry and the insulating slurry on the electrode sheet. The specific configuration of the coating apparatus 200 according to the present embodiment will be described herein.

The electrode drying apparatus A is for drying the first coating layer coated on the electrode sheet to form the second coating layer. Accordingly, the electrode drying apparatus A may include a dryer for forming the second coating layer by applying heat energy Q to the composite slurry layer and the insulating slurry layer constituting the first coating layer to evaporate the solvent. There is no particular limitation on the type of electrode drying apparatus A, and its type, shape, configuration, or the like may be implemented in various ways.

The rolling apparatus B may be an apparatus for completely bonding the second coating layer formed on the electrode sheet, i.e., the dried composite slurry layer and insulating slurry layer, to the electrode sheet. For example, the rolling apparatus B may apply a predetermined pressure in a thickness direction of the electrode sheet so that the second coating layer is completely adhered to the electrode sheet. The rolling apparatus B may be, for example, a rolling roller, but is not limited thereto, and its type, shape, configuration, or the like may be implemented in various ways.

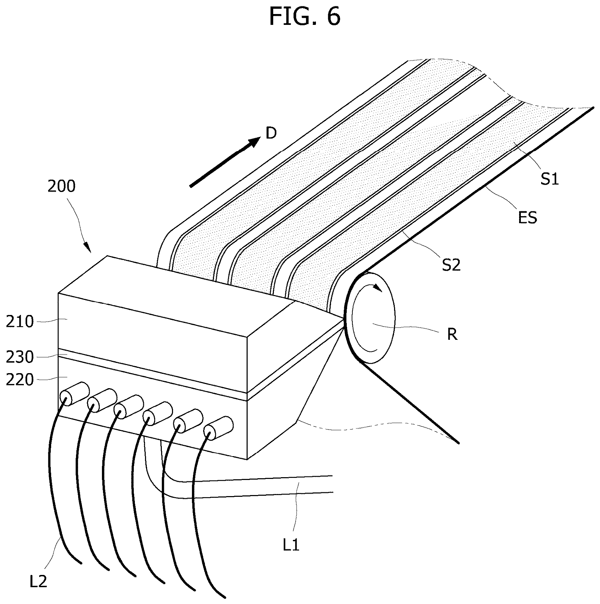

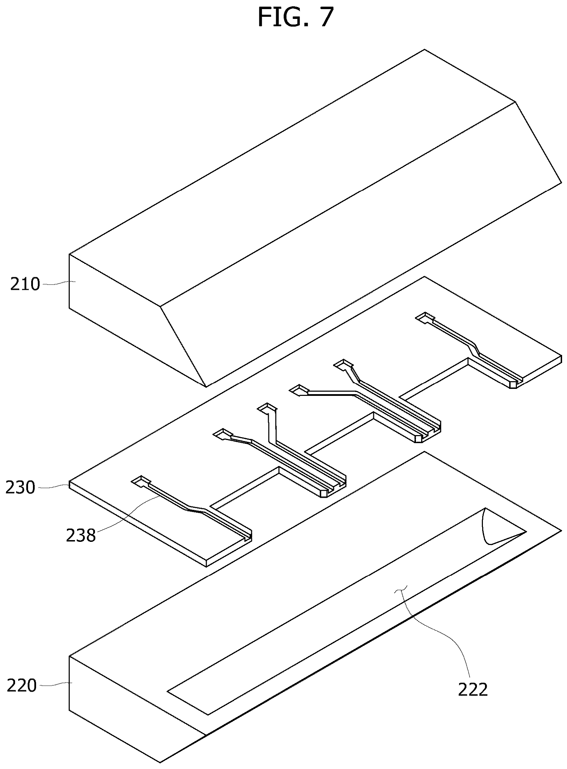

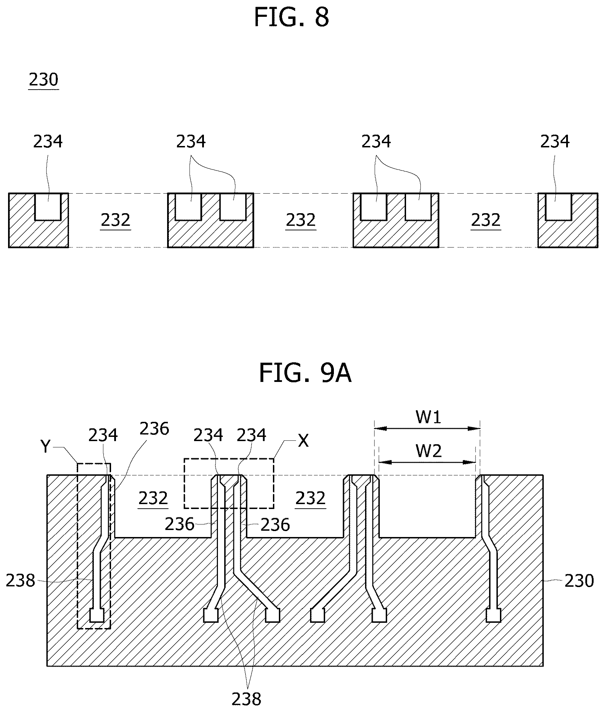

FIG. 6 is a view schematically illustrating a process of forming a composite slurry layer and an insulating slurry layer on an electrode sheet using the coating apparatus 200 according to embodiments, FIG. 7 is an exploded perspective view illustrating an example of the coating apparatus of FIG. 6, and FIG. 8 is a view schematically illustrating a spacer 230 in the coating apparatus in FIG. 7 as viewed from a roller side.

Referring to FIGS. 6 to 8, the coating apparatus 200 may be a die coater. More specifically, the coating apparatus 200 may include an upper die 210 (first die), a lower die 220 (second die), and the spacer 230 interposed between the upper die 210 and the lower die 220. However, although a roller R is illustrated in FIG. 6 as a separate component from the coating apparatus 200, the roller R may also be considered as a component of the coating apparatus 200.

In FIG. 6, it is illustrated that the composite slurry and the insulating slurry are continuously coated on an electrode sheet ES, which is conveyed in one direction D by the roller R, to simultaneously form composite slurry layers S1 and insulating slurry layers S2 in the shape of stripes. Also, in FIG. 6, it is illustrated that three composite slurry layers S1 are simultaneously formed side by side in a width direction of the electrode sheet ES, and the insulating slurry layers S2 are formed on both edges of each composite slurry layer S1, but this is merely an example. For example, one or more composite slurry layers S1 may be simultaneously formed on the electrode sheet ES. Additionally, the insulating slurry layer S2 may be formed only on one edge of each composite slurry layer S1.

Additionally, as illustrated in FIG. 6, a composite slurry supply pipe L1 for supplying the composite slurry and an insulating slurry supply pipe L2 for supplying the insulating slurry may be connected to the coating apparatus 200 from the outside. However, the number and connection positions of the composite slurry supply pipe L1 and the insulating slurry supply pipe L2 illustrated in FIG. 6 are exemplary.

For example, in FIG. 6, although the composite slurry supply pipe L1 and the insulating slurry supply pipe L2 are each illustrated as being connected to the lower die 220, one or more supply pipes may be connected to the upper die 210. In addition, a plurality of composite slurry supply pipes L1 instead of a single pipe, for example, three may be connected to the lower die 220. Alternatively, the number of insulating slurry supply pipes L2 connected to the lower die 220 may be three or one instead of six. Furthermore, the insulating slurry supply pipe L2 may be connected to the spacer 230.

The upper die 210 is disposed such that a bottom surface thereof is in contact with an upper surface of the spacer 230. In addition, upper ends of a composite material discharge port 232 (first discharge port) through which the composite slurry is discharged and an insulator discharge port 234 (second discharge port) through which the insulating slurry is discharged, may be defined by the bottom surface of the upper die 210. However, the present disclosure is not limited thereto, and the upper ends of the composite material discharge port 232 and the insulator discharge port 234 may be defined by another upper end member constituting the spacer 230. The bottom surface of the upper die 210 may generally have a flat planar shape.

The lower die 220 is disposed such that an upper surface thereof is in contact with a bottom surface of the spacer 230. A lower end of the composite material discharge port 232 may be defined by an upper surface of the lower die 220. A lower end of the insulator discharge port 234 may be defined by a separate member constituting the spacer 230. However, the present disclosure is not limited thereto, and the lower end of the composite material discharge port 232 may be defined by another member of the spacer 230, and/or the lower end of the insulator discharge port 234 may be defined by the upper surface of the lower die 220. The upper surface of the lower die 220 may generally have a flat planar shape.

One or more cavities 222 having a predetermined shape and size may be formed in the lower die 220. As one example, one cavity 222 may be formed in the upper surface of the lower die 220. In FIG. 7, although only one cavity 222 is illustrated as being formed, a plurality of cavities 222 may be formed. For instance, the number of cavities 222 may be formed to correspond to the number of composite material discharge ports 232.

The cavity 222 may be formed to communicate with the composite material discharge port 232 of the spacer 230. As illustrated, in the case in which there is only one cavity 222, the cavity 222 may be formed to communicate with all the composite material discharge ports 232. On the other hand, when the number of cavities 222 corresponds to the number of composite material discharge ports 232, each cavity 222 and each composite material discharge port 232 may communicate in a one-to-one correspondence.

The cavity 222 may be an empty space in which the composite slurry, introduced through the composite slurry supply pipe L1 is filled. In addition, the composite slurry flowing into and filling the cavity 222 may be discharged to the outside through the composite material discharge port 232 under the pressure of the composite slurry continuously introduced through the composite slurry supply pipe L1. Accordingly, the composite slurry layer may be continuously formed on the electrode sheet ES.

Although not illustrated in the drawing, the lower die 220 may additionally include a cavity (not illustrated) in which the insulating slurry introduced through the insulating slurry supply pipe L2 is filled. In this case, the cavity for the insulating slurry may communicate with a flow path 238 of the spacer 230. Alternatively, the flow path 238 may directly communicate with the insulating slurry supply pipe L2 via a nozzle provided at a portion in which the insulating slurry supply pipe L2 is connected.

The spacer 230 is disposed between the upper die 210 and the lower die 220. More specifically, the upper surface of the spacer 230 is disposed to contact the bottom surface of the upper die 210, and the lower surface of the spacer 230 is disposed to contact the upper surface of the lower die 220. In addition, the lower die 220, the spacer 230, and the upper die 210, which are stacked, may be integrally coupled to each other by a predetermined coupling device (not illustrated) (see FIG. 6).

The spacer 230 includes the composite material discharge port 232 for discharging the composite slurry and the insulator discharge port 234 for discharging the insulating slurry. As illustrated in FIGS. 6 and 8, the composite material discharge port 232 and the insulator discharge port 234 may be located at one end of the spacer 230 facing the roller R so that the composite slurry and the insulating slurry may be discharged onto the electrode sheet ES conveyed by the roller R. According to the present embodiment, the composite material discharge port 232 and the insulator discharge port 234 may be disposed side by side at one end of the spacer 230 so that the composite slurry and the insulating slurry may be simultaneously discharged onto the electrode sheet ES.

As illustrated in FIG. 8, when viewed from the roller R side, the composite material discharge port 232 and the insulator discharge port 234 may each be regarded as openings having a predetermined size and shape. Also, the composite slurry filled in the cavity 222 may be discharged through the opening, i.e., the composite material discharge port 232. In addition, the insulating slurry supplied through the flow path 238 may be discharged through the opening, i.e., the insulator discharge port 234.

According to embodiments of the present disclosure, a height of the composite material discharge port 232 may be substantially equal to a thickness of the spacer 230. That is, an upper end and a lower end of the composite material discharge port 232 may be substantially parallel to the lower surface of the upper die 210 and the upper surface of the lower die 220, respectively. The height of the composite material discharge port 232 may be slightly greater than a thickness of a composite layer to be finally formed on the electrode sheet ES, in consideration of drying and rolling processes performed after the coating process in the coating apparatus 200. For example, the height of the composite material discharge port 232 may range from 0.7 mm to 1.3 mm, but is not limited thereto. A width of the composite material discharge port 232 may be substantially equal to the width of the composite layer to be finally formed on the electrode sheet ES, or may be slightly greater (e.g., by approximately 0.1 mm) considering the overlap with the insulator layer.

A height of the insulator discharge port 234 may be smaller than the height of the composite material discharge port 232. Accordingly, the insulating coating layer formed on the electrode sheet ES may have a smaller thickness than the composite coating layer. For example, when the height of the composite material discharge port 232 is about 1.0 mm, the height of the insulator discharge port 234 may range from 0.3 mm to 0.5 mm. There is no particular limitation on the width of the insulator discharge port 234, but in consideration of the function of preventing diffusion of the composite slurry and delamination of the composite layer, the width of the insulator discharge port 234 may be a size such that the insulator layer formed on the electrode sheet ES has a predetermined width (e.g., 0.4 mm to 0.8 mm).

The insulator discharge port 234 which has a smaller height than the composite material discharge port 232, may be disposed toward the upper end of the spacer 230. More specifically, the upper end of the insulator discharge port 234 may be substantially parallel to the lower surface of the upper die 210. In addition, the lower end of the insulator discharge port 234 may be disposed higher than the upper surface of the lower die 220. Accordingly, the insulating slurry discharged through the insulator discharge port 234 may diffuse over the composite slurry discharged through the composite material discharge port 232, and a portion thereof may overlap the composite slurry.

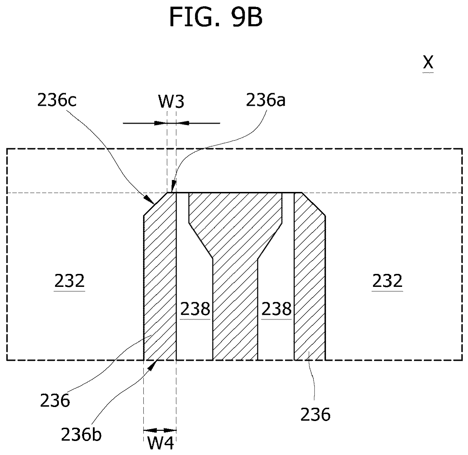

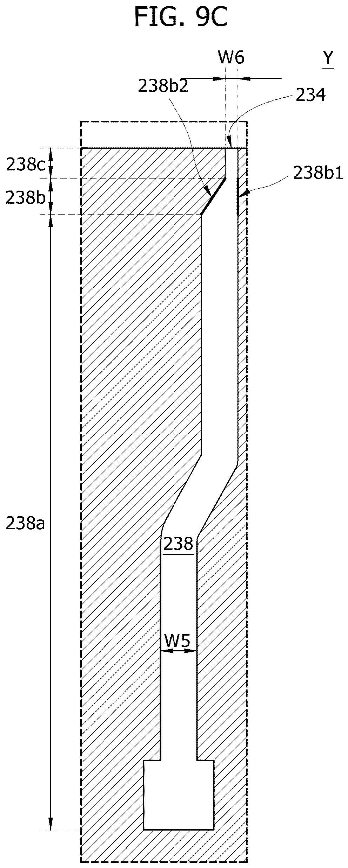

FIG. 9A is a view schematically illustrating the upper surface of the spacer 230 in FIG. 7, FIG. 9B is an enlarged view of portion X in FIG. 9A, and FIG. 9C is an enlarged view of portion Y in FIG. 9A.

Referring to FIGS. 9A to 9C, three composite material discharge ports 232 are disposed to be spaced apart from each other on the upper surface of the spacer 230. Also, the insulator discharge ports 234 are disposed at predetermined intervals on both sides of each composite material discharge port 232. The composite material discharge port 232 may be a rectangular empty space having a predetermined height and length when viewed from above so as to communicate with the cavity 222 of the lower die 220. On the other hand, the insulator discharge port 234 may be located at an end portion of the flow path 238 so as to communicate with the flow path 238, and may correspond to an opening having a shape such as a square when viewed from the discharge direction (see FIG. 8).

The reason why the insulator discharge port 234 and the composite material discharge port 232 are spaced apart from each other is to consider that the discharged slurry diffuses outward before being dried in the drying apparatus A. Therefore, the interval between the composite material discharge port 232 and the insulator discharge port 234 may be determined in consideration of the degree of diffusion of the discharged composite slurry and insulating slurry. The interval between the composite material discharge port 232 and the insulator discharge port 234 may be appropriately set so that an overlapping portion having a predetermined width may be formed at the edge portion before being introduced into the drying apparatus A, and there is no particular limitation on the size of the overlapping portion.

According to the present embodiment, the composite material discharge port 232 may have a shape in which a width W1 at a distal end is greater than a width W2 at another portion (non-distal end). Accordingly, since the composite slurry passes through a distal end of the composite material discharge port 232 which has a relatively large width, immediately before being discharged, edge portions thereof may diffuse further outward than other portions based on the width direction of the electrode sheet ES. As a result, the composite slurry layer formed on the electrode sheet ES may have a slightly smaller thickness at the edge portions compared to other portions.

According to the configuration of the present embodiment, the insulating slurry discharged from the insulator discharge port 234 is applied to a partially thinned portion of the composite slurry layer, thereby forming an overlapping portion. Additionally, the total thickness of the overlapping portion, that is, the combined height of the composite slurry layer and the insulating slurry layer at the overlapping portion, is relatively reduced compared to a case in which a thickness of the edge portion of the composite coating layer is substantially equal to a thickness of the middle portion. Therefore, the occurrence of a bulging phenomenon at the overlapping portion of the composite coating layer and the insulating coating layer after completion of the coating process may be suppressed. Accordingly, defects due to such a bulging phenomenon in a bundle of electrode sheets wound on a recovery roller after completion of the rolling process may be prevented.

According to embodiments of the present disclosure, a spacing portion 236 may be disposed between the composite material discharge port 232 and the insulator discharge port 234 so that the composite material discharge port 232 and the insulator discharge port 234 are spaced apart from each other. More specifically, the spacing portion 236 may be disposed between the rectangular-shaped composite material discharge port 232, the insulator discharge port 234, and the flow path 238. Due to the spacing portion 236, the composite material discharge port 232 and the insulator discharge port 234 are spaced apart from each other, and the composite material discharge port 232 and the flow path 238 may also be spaced apart from each other.

The spacing portion 236, as a part of the spacer 230, may be a separate member that is physically distinct from other parts. Alternatively, as illustrated, the spacing portion 236 is not physically distinct from other parts, but may be logically distinct. In this case, the spacing portion 236 may simply correspond to a part of the spacer 230 disposed between the composite material discharge port 232, the insulator discharge port 234, and the flow path 238.

According to the present embodiment, the spacing portion 236 may have a width W3 at a distal end 236a that is smaller than a width W4 of a non-distal end 230b, so that the composite material discharge port 232 may have a shape in which the width W1 at the distal end is greater than the width W2 at other parts. More specifically, the spacing portion 236 may have a chamfered shape in which a portion that includes a vertex of the distal end of the composite material discharge port 232 is chamfered from an overall rectangular shape. Due to the chamfered shape, the spacing portion 236 may have a chamfered edge 236c.

The size of the chamfered edge 236c, the chamfered angle, or the like may be appropriately determined in consideration of the difference between the width W1 at the distal end and the width W2 at the non-distal end of the composite material discharge port 232, the width of the overlapping portion of the composite coating layer and the insulating coating layer, or the like. For example, to ensure that the width of the overlapping portion is about 0.05 mm to 0.15 mm, when the width W4 at the non-distal end 230b ranges from 1 mm to 3 mm, the width W3 at the distal end 236a may be set to 0.1 mm to 0.3 mm. In this case, the composite material discharge port 232 may have a chamfered shape at an angle of about 30° to 60°, for example, about 45°. When the width of the overlapping portion is approximately 0.05 mm to 0.15 mm, the bulging phenomenon in the overlapping portion may be suppressed, and the composite coating layer under the insulating coating layer may be effectively prevented from diffusing or delaminating.

The spacer 230 may be provided with the flow path 238. The flow path 238 is intended to guide the insulating slurry, which is supplied through the insulating slurry supply pipe L2, to the insulator discharge port 234. As illustrated, the flow path 238 may be formed on the upper surface of the spacer 230 with a predetermined width and depth, but is not limited thereto.

The flow path 238 may have an overall uniform width. Alternatively, as illustrated in FIG. 9C, the flow path 238 may have a relatively smaller width at the distal end than at the non-distal end. Accordingly, since the flow path 238 narrows just before the insulator discharge port 234 communicating therewith, the flow speed of the insulating slurry discharged through the insulator discharge port 234 may increase, thereby improving the straightness of the flow. Therefore, the width of the insulating coating layer formed on the electrode sheet ES may be made as constant as possible, thereby preventing the width dispersion from increasing.

According to embodiments, the flow path 238 may include an inlet flow path portion 238a extending from the inlet into which the insulating slurry is introduced with a predetermined width (a first width W5), a connecting flow path portion 238b extending from the inlet flow path portion 238a and having a gradually decreasing width, and a discharge flow path portion 238c extending from the connecting flow path portion 238b and extending to the insulator discharge port 234 with a predetermined width (a second width W6). In the connecting flow path portion 238b, the width may be reduced from the first width W5 to the second width W6. However, this configuration is merely exemplary, and the flow path 238 may have a different shape as long as the insulator initially flows through an upstream portion of the flow path 238 at a predetermined speed, and then flows at a higher speed in a downstream portion of the flow path 238 adjacent to the insulator discharge port 234 and is discharged through the insulator discharge port 234.

As described above, the cross-sectional area of the discharge flow-path portion 238c is smaller than the cross-sectional area of the inlet flow-path portion 238a. In addition, because the flow rates of the inlet flow-path portion 238a and the discharge flow-path portion 238c are the same, and the cross-sectional area of the discharge flow-path portion 238c is reduced compared to that of the inlet flow-path portion 238a, the insulator slurry can be discharged through the insulator discharge portion 234 at a relatively higher speed. As a result, the discharged insulating slurry has a stronger tendency to proceed in a straight line in a longitudinal direction of the electrode sheet ES rather than diffusing laterally. Accordingly, the insulating coating layer may maintain a relatively narrow width, the width of the overlapping portion may be formed to a desired size (e.g., about 0.1 mm), and the dispersion in the width may also be minimized. In consideration of these effects, the connecting flow path portion 238b may be inclined at an angle of about 40 to 70° with respect to the discharge surface of the insulating slurry.

According to one implementation example of the present embodiment, in the connecting flow path portion 238b, a side 238b1 adjacent to the composite material discharge port 232 may be parallel to a side of the composite material discharge port 232, while an opposite side 238b2 located further away from the composite material discharge port 232 may have a structure that is inclined toward the composite material discharge port 232. That is, the side 238b1 adjacent to the composite material discharge port 232 is orthogonal to the discharge surface of the insulator discharge port 234, but the opposite side 238b2 located further away from the composite material discharge port 232 may be inclined with respect to the discharge surface. Accordingly, the insulating slurry layer having a predetermined width may have a relatively smooth straight line profile without any bumps at the portion overlapping the composite slurry layer.

According to embodiments of the present disclosure, a width of an overlapping portion in which a composite slurry layer and an insulating slurry layer overlap is made as small and uniform as possible. Accordingly, the occurrence of a bulging phenomenon due to the large width of an overlapping portion and the defects and performance degradation in an electrode due to the uneven width can be suppressed.

However, the effects obtainable through the present disclosure that are not limited to the effects described herein, and other technical effects not described will be clearly understood by those skilled in the art from the description of the disclosure described herein.

Although the present disclosure has been described with reference to embodiments shown in the drawings, these embodiments are merely exemplary, and it should be understood by those skill in the art that various modifications and equivalents are possible.

Therefore, the technical protection scope of the present disclosure should be determined by the claims.

## Claims

1. A coating apparatus (200) configured to coat a first slurry and a second slurry on an electrode sheet (ES) conveyed in a conveying direction (D), comprising:
a first die (210);
a second die (220) disposed to face the first die (210); and
a spacer (230) interposed between the first die (210) and the second die (220), the spacer (230) including a first discharge portion (232) configured to discharge the first slurry and a second discharge portion (234) located on at least one side of the first discharge portion (232) in a width direction of the electrode sheet (ES) and configured to discharge the second slurry, the width direction being perpendicular to the conveying direction (D),
wherein the first discharge portion (232) has a width (W1) at a distal end that is greater than a width (W2) at a non-distal end.

2. The coating apparatus (200) of claim 1, wherein:
the spacer (230) includes a spacing portion (236) disposed between the first discharge portion (232) and the second discharge portion (234); and
the spacing portion (236) has a width (W4) of a first size at a non-distal end (236b) and a width (W3) of a second size at a distal end (236a), the width (W3) of the second size being less than the width (W4) of the first size.

3. The coating apparatus (200) of claim 2, wherein the spacing portion (236) includes a chamfered shape (236c) in a direction from the first discharge portion (232) toward the second discharge portion (234).

4. The coating apparatus (200) of claims 2 or 3, wherein the first size ranges from 1 mm to 3 mm and the second size ranges from 0.1 mm to 0.3 mm.

5. The coating apparatus (200) of any of claims 1 to 4, wherein the apparatus (200) is configured such that a first slurry layer (S1) is formed on the electrode sheet (ES) by the first slurry and a second slurry layer (S2) is formed on the electrode sheet (ES) by the second slurry, and such that the second slurry layer (S2) overlaps an edge of the first slurry layer (S1) by a predetermined width.

6. The coating apparatus (200) of any of claims 1 to 5, wherein the coating apparatus (200) comprises the first slurry and the second slurry and wherein the first slurry includes a composite slurry and the second slurry includes an insulating slurry.

7. The coating apparatus (200) of any of claims 5 or 6, wherein the second slurry layer (S2) and the first slurry layer (S1) overlap in a width range of 0.05 mm to 0.15 mm.

8. The coating apparatus (200) of any of claims 1 to 7, wherein the apparatus comprises multiple second discharge portions (234), and wherein the second discharge portions (234) are located on both sides of the first discharge portion (232) in the width direction of the electrode sheet (ES).

9. The coating apparatus (200) of any of claims 1 to 8, wherein:
the spacer (230) includes a flow path (238) connecting an inlet into which the second slurry is introduced and the second discharge portion (234); and
the flow path (238) includes an inlet flow path portion (238a) extending from the inlet with a first width (W5), a connecting flow path portion (238b) extending from the inlet flow path portion (238a) and having a width that decreases from the first width (W5) to a second width (W6), and a discharge flow path portion (238c) extending from the connecting flow path portion (238b) and communicating with the second discharge portion (234) with the second width (W6).

10. The coating apparatus (200) of claim 9, wherein the connecting flow path portion (238b) is inclined at an angle of 40° to 70° with respect to a discharge surface of the second discharge portion (234).

11. The coating apparatus (200) of any of claims 1 to 10, wherein:
the second die (220) includes a cavity (222) into which the first slurry is introduced and filled; and
the first discharge portion (232) communicates with the cavity (222).

12. The coating apparatus (200) of any of claims 1 to 11, wherein the coating apparatus (200) is configured to simultaneously coat as first slurry a composite slurry and as second slurry an insulating slurry on the electrode sheet (ES).

13. A coating apparatus (200) configured to simultaneously coat a composite slurry and an insulating slurry on an electrode sheet (ES) conveyed in a conveying direction (D), comprising:
an upper die (210);
a lower die (220) disposed to face the upper die (210); and
a spacer (230) interposed between the upper die (210) and the lower die (220), the spacer (230) including a composite material discharge port (232) configured to discharge the composite slurry and an insulator discharge port (234) disposed on at least one side of the composite material discharge port (232) to discharge the insulating slurry,
wherein the composite material discharge port (232) includes a chamfered shape (236c) such that a width (W1) at a distal end is greater than a width (W2) at a non-distal end.

14. An electrode manufacturing apparatus comprising a coating apparatus (200) configured to form a first coating layer on an electrode sheet (ES), a drying apparatus (A) configured to dry the first coating layer on the electrode sheet (ES) proceeding in a conveying direction (D) from the coating apparatus (200) to form a second coating layer, and a rolling apparatus (B) configured to press the electrode sheet (ES) on which the second coating layer is formed to bond the second coating layer to the electrode sheet (ES),
wherein the coating apparatus (200) is configured according to any of the previous claims.
